# EUROPEAN PATENT SPECIFICATION

(11) **EP 4 423 008 B1**
(45) Date of publication and mention of the grant of the patent: **03.06.2026**
(21) Application number: 22812465.7
(22) Date of filing: 25.10.2022
(51) Int. Cl.: C01B 17/50, C01B 17/74, C01B 32/40, C01B 32/50

(54) **SULFUR DRIVEN CARBON MONOXIDE PRODUCTION PROCESS**
SCHWEFELGESTEUERTES KOHLENSTOFFMONOXIDHERSTELLUNGSVERFAHREN
PROCESSUS DE PRODUCTION DE MONOXYDE DE CARBONE À BASE DE SOUFRE

(30) Priority: 25.10.2021 EP 21204547
(43) Date of publication of application: 04.09.2024
(73) Proprietor: D-CRBN BV, 2020 Antwerpen (BE)
(72) Inventor: SCHELTJENS, Gill, 2020 Antwerp (BE); KIEKENS, Erik, 2020 Antwerp (BE); TRENCHEV, Georgi, 2020 Antwerp (BE)
(74) Representative: Brantsandpatents bv
(86) International application number: PCT/EP2022/079714
(87) International publication number: WO 2023/072901

(56) References cited:
- WO-A1-2019/037725
- US-B2- 9 896 339
- RAMSES SNOECKX ET AL: "Plasma technology – a novel solution for CO 2 conversion?", CHEMICAL SOCIETY REVIEWS, vol. 46, no. 19, 1 January 2017 (2017-01-01), UK, pages 5805 - 5863, XP055598841, ISSN: 0306-0012, DOI: 10.1039/C6CS00066E

## Description

### Technical field

The present invention concerns a method and system for producing carbon monoxide and a mixture of sulfur dioxide and sulfur trioxide from carbon dioxide using sulfur in a plasma process.

### Background

Carbon dioxide (CO2, CO₂) is a typical exhaust gas for a plethora of (bio)chemical reactions. The over-presence of CO2 in the atmosphere is also a main cause for climate change, and in particular for heating of the planet. Carbon dioxide (CO2 or CO₂) is a heat-trapping greenhouse gas, which is released through human activities as well as natural processes such as respiration and volcanic eruptions. Over the past 170 years, human activities have raised concentrations of CO2 in the atmosphere by 48% above pre-industrial levels, linking the CO2 emission to global warming. Many efforts are currently underway to reduce the exhaust of CO2 from industrial activity.

Hydrogen sulfate or sulfuric acid (H2SO4, H₂SO₄) is one the most used and produced industrial acids. Production of sulfuric acid of industrial quality acid include the burning of pure sulfur ("virgin acid"), roasting of mineral ores ("smelter acid") and regeneration of waste acid ("regen acid").

### 1. "Virgin" acid

So-called "virgin" acid is traditionally produced by burning pure sulfur in a stream of dry air. This sulfur is commonly obtained in liquid form from oil refineries. It is transported as a liquid at about 130-140°C as this is the optimum viscosity range for liquid sulfur; at higher temperatures the yellow S₈ starts to polymerise and becomes brown, tacky and very viscous, making it hard to pump.

The oxidation produces gaseous sulfite (SO2, SO₂), also called sulfur dioxide, in the first step:

S + O₂ → SO₂

This reaction is very exothermic. The heat is commonly used to generate steam. The second reaction to sulfate (SO3, SO₃) is reversible and traditionally requires a catalyst and carefully controlled reaction conditions, including lower temperatures than those found in a flame:

2SO₂ + O₂ → 2SO₃

This reaction is also exothermic and requires gas-gas heat exchangers in between catalyst beds. This catalyzed oxidation is what is called "the contact process". The SO₃, finally, only needs absorption in water to generate sulfuric acid:

SO₃ + H₂O → H₂SO₄

Note that in practice the SO₃ is absorbed not in pure water but in sulfuric acid, which is then diluted to the required concentration. Commercial grades are typically 96% or 98%; however concentrations of over 100% of sulfuric acid strength can also be made (this is then called "oleum").

### 2. Roasting

In roasting, the ore is treated with very hot air. This process is generally applied to sulfide minerals. During roasting, the sulfide is converted to an oxide, and sulfur is released as SO2. For the ores Cu₂S (chalcocite) and ZnS (sphalerite), balanced equations for the roasting are:

2 Cu₂S + 3 O₂ → 2 Cu₂O + 2 SO₂

2 ZnS + 3 O₂ → 2 ZnO + 2 SO₂

The gaseous product of sulfide roasting, SO₂, is used to produce sulfuric acid via the contact process described above. Many sulfide minerals may contain other components such as arsenic or mercury that cause environmental concerns and end up in the sulfuric acid produced.

### 3. Regeneration

In a regeneration plant, the sulfuric acid is heated in a flame (often from burning natural gas or sulfur). The reverse reaction occurs at this high temperature, and SO₂ is generated:

H₂SO₄ → H₂O + SO₂ + ½ O₂

The resulting gas stream is dried, and led through the catalyst beds of the contact process as discussed above. After oxidation to SO₃ and absorption in water, sulfuric acid is generated.

In the above prior art processes, it is seen that oxygen (O2, O₂) is used to oxidise the sulfur or SO2.

Also, it is a disadvantage of the current production processes for sulfuric acid, that vanadium pentoxide catalyst beds are required. These catalysts are expensive. They require replacement every few years, causing long and costly shutdowns for the plant. Vanadium pentoxide is also toxic and suspected carcinogen.

The vanadium pentoxide catalyst beds require the SO2 (e.g. from regeneration plants) to be very dry in order to avoid de-activation of the catalyst.

US9896339 discloses a method of producing carbon monoxide (CO) and sulfur dioxide (SO₂), the method comprising obtaining a reaction mixture comprising carbon dioxide gas (CO₂(g)) and elemental sulfur gas (S(g)), and subjecting the reaction mixture to conditions sufficient to produce a product stream comprising CO(g) and SO₂(g).

Ramses Snoeckx et al. "Plasma technology - a novel solution for CO2 conversion?" discusses plasma technology for the application of CO2 splitting and the dry reformation of methane.

WO2019/037725 discloses a method and a device for synthesizing a compound by a low temperature plasma double electric field assisted gas phase reaction; the disclosed method utilizes two different electrode corona discharge electric fields in a plasma assisted reactor to form a plasma double electric field, using electric energy. The gas is converted into gas molecules, atoms, ions and/or free radicals, and then reformed and reduced to obtain organic compounds such as aliphatic hydrocarbons, higher carbon ethers, higher alcohols, higher alcohols, lower alcohols, etc.; Inorganic compounds such as N2, O2, H2SO4, NH3 and the like.

The present invention aims to reduce CO2 exhaust. The present invention aims to reduce the amount of steps required to produce SO3. The present invention aims to oxidize sulfure sulfur and SO2 at the same time. The inventors believe that a common solution for these problems has not been disclosed before, and moreover that it is not known in the prior art that these two problems could be connected.

### Summary of the invention

The present invention concerns a method and system for oxidizing sulfur (S) according to claim 1. Preferred embodiments are disclosed in the dependent claims 1-7 and in the present document.

Known techniques to oxidize sulfur utilize a two-step process. Sulfur is first oxidized to SO2. SO2 is then separately oxidized to SO3 in a catalytic contact process under substantially different process conditions. This two-step process inherently requires complicated equipment and high capital investments.

The inventors have surprisingly discovered that the highly reactive species from plasma dissociation of CO2 are suitable to oxidize sulfur to a mixture of SO2 and SO3 immediately.

The technique of the present invention is a scalable plasma-based CO2 conversion technology as well as a scalable plasma-based sulfur and sulfur dioxide oxidizing technology.

The method solves the combined problem of reducing CO2 exhaust and at the same time oxidizing sulfur and/or SO2. Oxidization of sulfur hereby preferably leads to formation of SO2, SO3 or a mixture thereof, preferably SO3 is obtained. Oxidation of SO2 preferably leads to formation of SO3. The formed SO3 can be used to produce sulfuric acid.

### Overview of the figures

**Figures 1A** **and** **1B** illustrate embodiments of the present invention.
**Figure 2** illustrates a plasma reactor in accordance with an embodiment of the present invention.

### Detailed discussion of the invention

In the following, references are made to the figures, which act to illustrate the present invention.

The present invention relates to a method for oxidizing reactant sulfur (S) by means of carbon dioxide (CO2), comprising the steps of:
a) decomposing CO2 to form carbonyl (CO) radicals and oxygen (O) radicals by igniting a plasma in a plasma process fluid stream comprising said CO2;
b) contacting reactant sulfur with said oxygen radicals, thereby oxidizing said reactant sulfur to a mixture of product sulfur dioxide (SO2) and product sulfur trioxide (SO3);
thereby obtaining an outlet fluid stream comprising said product sulfur dioxide and said product sulfur trioxide.

Hence, the method is a method for oxidizing sulfur by means of carbon dioxide wherein in step b, sulfur is contacted with said oxygen radicals. Hereby, preferably, a mixture of SO2 and SO3 is formed and the outlet fluid stream comprises said mixture thereof.

The conversion of sulfur to a mixture of SO2 and SO3 in a single step provides a significant reduction in the process required to obtain SO3. Furthermore, the scavenging of oxygen from dissociated CO2 removes this oxygen for recombination with CO to CO2, thereby increasing the yield of the plasma dissociation of CO2. As a result, the combination of plasma dissociation of CO2 and oxidation of sulfur is synergistic. The sulfur scavenges oxygen radicals, thereby reducing recombination of CO and oxygen radicals to CO2 and thus increasing the yield of the plasma dissociation. The highly reactive oxygen radicals allow oxidation of sulfur not only to SO2, but also to SO3. The oxidation of S or SO2 to SO3 generally requires a catalytic process.

In a preferred embodiment, the outlet fluid stream comprises a mixture of sulfur dioxide SO2 and sulfur trioxide SO3. In a further preferred embodiment, the ratio by weight of SO3 to SO2 is at least 0.001, more preferably the ratio by weight of SO3 to SO2 is at least 0.01, more preferably the ratio by weight of SO3 to SO2 is at least 0.05, more preferably the ratio by weight of SO3 to SO2 is at least 0.1, more preferably the ratio by weight of SO3 to SO2 is at least 0.2, more preferably the ratio by weight of SO3 to SO2 is at least 0.3, more preferably the ratio by weight of SO3 to SO2 is at least 0.4, more preferably the ratio by weight of SO3 to SO2 is at least 0.5, more preferably the ratio by weight of SO3 to SO2 is at least 0.6, more preferably the ratio by weight of SO3 to SO2 is at least 0.7, more preferably the ratio by weight of SO3 to SO2 is at least 0.8, more preferably the ratio by weight of SO3 to SO2 is at least 0.9, more preferably the ratio by weight of SO3 to SO2 is at least 1.0, more preferably the ratio by weight of SO3 to SO2 is at least 1.0, more preferably the ratio by weight of SO3 to SO2 is at least 1.2, more preferably the ratio by weight of SO3 to SO2 is at least 1.4, more preferably the ratio by weight of SO3 to SO2 is at least 1.5, more preferably the ratio by weight of SO3 to SO2 is at least 1.8, more preferably the ratio by weight of SO3 to SO2 is at least 2.0, more preferably the ratio by weight of SO3 to SO2 is at least 3.0, more preferably the ratio by weight of SO3 to SO2 is at least 4.0, more preferably the ratio by weight of SO3 to SO2 is at least 5.0, more preferably the ratio by weight of SO3 to SO2 is at least 6.0, more preferably the ratio by weight of SO3 to SO2 is at least 7.0, more preferably the ratio by weight of SO3 to SO2 is at least 8.0, more preferably the ratio by weight of SO3 to SO2 is at least 9.0, more preferably the ratio by weight of SO3 to SO2 is at least 10.0, more preferably the ratio by weight of SO3 to SO2 is at least 15.0, more preferably the ratio by weight of SO3 to SO2 is at least 20.0, more preferably the ratio by weight of SO3 to SO2 is at least 25.0, more preferably the ratio by weight of SO3 to SO2 is at least 75.0, more preferably the ratio by weight of SO3 to SO2 is at least 100.0. SO2 is generally oxidized to SO3 for sulfuric acid production. Higher amounts of SO3 in the mixture are generally preferred, as this reduces the need for the catalytic contact process. The applicant has surprisingly found that the amount of SO3 produced is considerably higher when contacting radicals from plasma dissociated CO2 with sulfur than in known sulfur oxidation processes. Without being bound by theory, this is believed to be a consequence of the highly reactive oxygen radicals in the afterglow of the plasma.

As indicated above, the CO2 is decomposed in carbonyl and oxygen radicals. The present invention allows the oxygen radicals to react with the sulfur and/or sulfur dioxide, thereby oxidizing the sulfur and/or sulfur dioxide, thereby preferably forming SO2, SO3 or a mixture thereof. However, the plasma also comprises the carbonyl radicals. The method of the present invention therefor preferably comprises the step of producing carbon monoxide from the carbonyl radicals. The production of carbon monoxide from carbonyl radicals may occur naturally. Alternatively, or additionally, the step of producing carbon monoxide from the carbonyl radicals preferably comprises exposing the carbonyl radicals to a carbon donor. The carbon donor may preferably comprise natural coal, carbon black, activated coal, carbon fiber, cokes, or any combination thereof. Hence, in a preferred embodiment, the outlet fluid stream comprises carbon monoxide.

Preferably the plasma is ignited at atmospheric pressure or around atmospheric pressure, such as between 0.5 and 2.0 bar, preferably between 0.6 and 1.8 bar, more preferably between 0.7 and 1.6 bar, still more preferably between 0.8 and 1.4 bar, yet more preferably between 0.9 and 1.2 bar, such as 0.9 bar, 1.0 bar, 1.1 bar, 1.2 bar or any value there between, most preferably at atmospheric pressure. Alternatively, the plasma is ignited at a process pressure which is higher than atmospheric pressure, such as at 2.0 bar or higher, preferably 2.5 bar or higher, still more preferably 3.0 bar or higher.

In a preferred embodiment, a continuous plasma process fluid stream is provided and a continuous outlet fluid stream is obtained. Hence, the method is preferably performed continuously, as opposed to being performed in batches.

The present invention is related to a system for oxidizing reactant sulfur (S) by means of carbon dioxide (CO2), comprising a plasma reactor (6) having:
- a reaction chamber comprising an inlet for a plasma process fluid stream and an outlet for an outlet fluid stream;
- plasma igniting means for igniting a plasma in the plasma process fluid stream within the reaction chamber,
the system further comprising:
- a CO2 supply (11) in fluid connection with the reaction chamber (6) via the inlet (24), the CO2 suitable for supplying a feedstock comprising CO2, and
- a reactant sulfur supply (12) in fluid connection with the reaction chamber, the reactant sulfur supply comprising reactant sulfur (3).

In an embodiment, wherein the plasma process fluid stream comprises a gas, a gas mixture or an aerosol. More in particular, the plasma process fluid stream preferably comprises carbon dioxide in gaseous form and/or as an aerosol. In an embodiment, the plasma process fluid stream also comprises sulfur in gaseous form and/or as an aerosol, preferably as an aerosol, such as an aerosol of sulfur-comprising droplets in a gaseous CO2-comprising stream. Additionally or alternatively, the plasma process fluid stream may comprise sulfur dioxide in gaseous form or as an aerosol, preferably as an aerosol, such as an aerosol of sulfur-comprising droplets in a gaseous CO2-comprising stream.

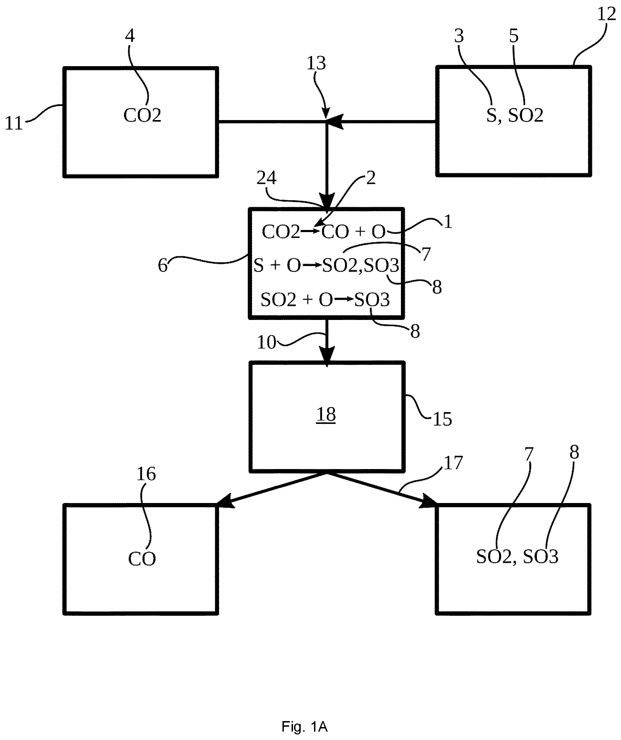

In an embodiment, the plasma process fluid stream comprises sulfur. Hereby the sulfur is mixed with the CO2 already (13) before the inlet of the reaction chamber as in fig. 1A. This is particularly preferred if the method of the present invention is related to the oxidizing of sulfur: in that case the sulfur is preferably mixed with the CO2 in the plasma process fluid stream prior to injecting a plasma process fluid in the reaction chamber and/or prior to igniting a plasma in the plasma process fluid stream, i.e. the plasma process fluid stream comprises sulfur and CO2 and preferably does not comprise SO2.

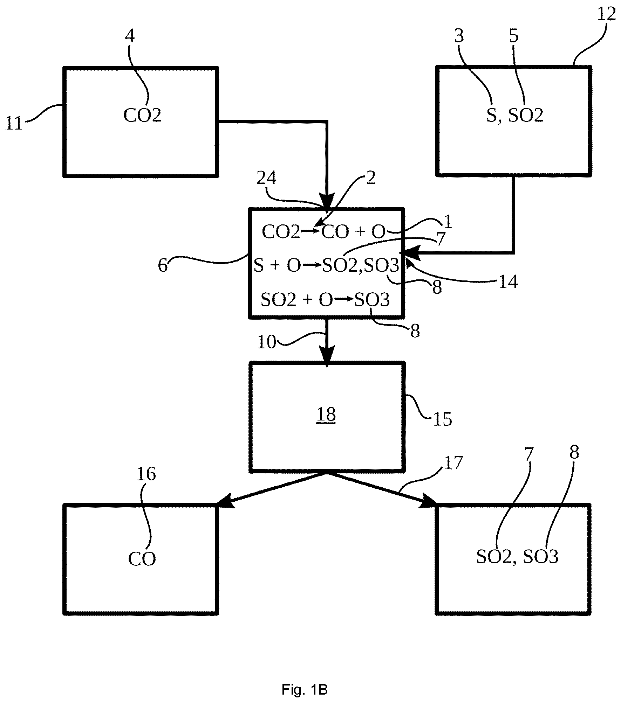

Alternatively, or additionally, the sulfur is mixed with the carbonyl (CO) radicals and oxygen (O) radicals (14) as shown in fig. 1B. This means the sulfur and/or sulfur dioxide is added to the plasma process fluid stream during or after the step of igniting a plasma in the plasma process fluid stream. In an embodiment, sulfur and/or sulfur dioxide or added in an afterglow region of the plasma.

When igniting a plasma in a plasma process fluid stream, two regions in the stream can be identified: a plasma zone wherein radicals and/or excited species are actively created in the plasma process fluid stream by the igniting means, and a plasma afterglow region wherein there is no active creation of excited species in the plasma process fluid, but wherein excited species, such as radicals and in particular CO radicals and O radicals, are still present.

In an embodiment, the method of the present invention comprises the step of producing carbon monoxide from the carbonyl radicals. Preferably, the step of producing carbon monoxide from the carbonyl radicals comprises exposing the carbonyl radicals to a carbon donor.

In a preferred embodiment, the method comprises the step of separating (15) carbon monoxide (16) from the SO2 (7), the SO3 (8) or the mixture thereof (17) in the outlet fluid stream (10). In a particularly preferred embodiment, the carbon monoxide is separated from the SO2, the SO3 or the mixture thereof by exposing the outlet fluid stream to water. Since carbon monoxide is in essence non-soluble in water, whereas SO2 and SO3 are soluble in water, exposing the outlet fluid stream to water allows at least a partial and preferably an in essence complete separation of the carbon monoxide from the SO2 and/or SO3 in the outlet fluid stream.

In a more preferred embodiment, the outlet fluid stream is a gas which comprises:
- carbon monoxide, and
- a mixture of SO2 and SO3.

In a further preferred embodiment, said outlet fluid stream is washed with water or bubbled through water for separating the carbon monoxide from the SO2, the SO3 or the mixture thereof. Hereby, the carbon monoxide is preferably captured as a gaseous fraction and/or the SO2, the SO3 or the mixture thereof is preferably captured as a liquid aqueous solution. In a preferred embodiment, said water comprises an alkali to increase the pH of the water to better dissolve the SO2 from the outlet fluid stream into the water. Preferably said alkali is NaOH, KOH, ammonia or any combination thereof. In this embodiment, an aqueous solution of sulfite and/or bisulfite is obtained, such as a sulfite and/or bisulfite of sodium, potassium, ammonia or any combination thereof, depending on which alkali is used. Preferably, the pH of the water is at least 8, more preferably the pH of the water is at least 9, more preferably the pH of the water is at least 10, more preferably the pH of the water is at least 11, more preferably the pH of the water is at least 12, more preferably the pH of the water is at least 13.

In a preferred embodiment, the product SO2 is liquefied under pressure.

In an embodiment, the product SO3 is liquefied. However, in an alternative embodiment, the product SO3 is used, preferably directly, in a further chemical process, such as sulphonation or the production of chlorosulfonic acid.

In a preferred embodiment, the plasma igniting means of the system according to the present invention comprise a set of electrodes for igniting a plasma in the plasma process fluid stream within the reaction chamber for creating CO and oxygen (O) radicals.

In an embodiment, the system of the present invention comprises a carbon donor in the reaction chamber and/or at the outlet of the reaction chamber for producing carbon monoxide from carbonyl radicals. Preferably, the carbon donor comprise carbon-donor particles.

Igniting plasma in a reaction chamber comprising a carbon donor allows O species in the plasma to bind with carbon to form CO. By introducing a carbon donor in the reaction chamber, the amount of O radicals binding with reactant sulfur or reactant sulfur dioxide can be reduced in favour of producing more carbon monoxide in the outlet fluid stream. Thus, the presence of a carbon donor allows to regulate the relative abundance of product sulfur dioxide and/or reactant sulfur trioxide on the one hand, and carbon monoxide on the other hand. The relative abundance (SO2 and/or SO3 versus CO) in the outlet fluid stream can thus be regulated as desired by altering the amount of the carbon donor in the reaction chamber. Hence, if there is a need to produce more carbon monoxide and less product SO2 and/or product SO3, a high amount of the carbon donor can be introduced in the reaction chamber, and if there is a need to produce less carbon monoxide and more product SO2 and/or SO3, a smaller amount of the carbon donor, or even no amount of carbon donor can be introduced in the reaction chamber.

In a preferred embodiment, the reaction chamber is a fluidized bed reactor configured to fluidize the carbon donor particles. In another embodiment, the reaction chamber is a fixed bed reactor. In still another embodiment, the reaction chamber is a powder down flow reaction chamber configured to create a down flow of carbon-donor particles, preferably under the influence of gravity, while exposing the down flow of carbon-donor particles to O radicals.

In an embodiment, the particles comprise CO2-to-CO conversion catalysts.

In an embodiment, the carbon-donor particles are in a fluidized state.

In a preferred embodiment, the plasma reactor comprises a plasma jet generator, preferably an atmospheric plasma jet generator.

In a preferred embodiment, the reaction chamber comprises a particle inlet for introducing carbon-donor particles in the reaction chamber, preferably for continuously introducing carbon-donor particles in the reaction chamber.

In an embodiment, the system of the present invention comprises a carbon monoxide separation unit (18) in fluid connection with the outlet. Preferably the carbon monoxide separation unit comprises a washer unit configured for washing outlet fluid with water or other suitable liquid, or configured for bubbling outlet fluid through water for separating the carbon monoxide from the SO2, the SO3 or the mixture thereof.

Herein, it is stated that "The highest conversions of 42% were obtained for packed-bed DBDs while the highest energy efficiency of 23% was obtained with a pulsed power DBD." DBD herein refers to Dielectric barrier discharges (DBDs), also called 'silent discharges'. A DBD consists of two plane-parallel or concentric metal electrodes and, as its name suggests, it contains at least one dielectric barrier (e.g. glass, quartz, ceramic material or polymers) in between the electrodes. The purpose of the dielectric barrier is to restrict the electric current and thus to prevent the formation of sparks and/or arcs. A gas flow is applied between the (discharge) gap, which can typically vary from 0.1 mm, to over 1 mm to several cm. In general, DBDs operate at approximately atmospheric pressure (0.1-10 atm, but usually around 1 atm), while an alternating voltage with an amplitude of 1-100 kV and a frequency of a few Hz to MHz is applied between both electrodes.

The plasma reactor may comprise one or more reaction chambers. The plasma reactor, and preferably the one or more reactor chambers thereof, can preferably be equipped with a swappable catalyst bed tray. In tris tray, various solids and liquids can preferably be added to the process, in order to enhance the conversion. One preferred example is coal, which upon heating by the plasma will improve the CO yield by the reverse Bouduard reaction. The catalyst tray can be fixed, or on continuous supply chain, i.e. a rotating belt or a feed screw. The catalyst bed can preferably be adjustable in position, i.e. up and down, in order to provide optimal distance to the plasma afterglow. Multiple stacked trays may also be preferred. A rail insert can be provided in the plasma reactor, and preferably the one or more reactor chambers thereof, to hold the catalyst tray.

In an embodiment of the invention, the plasma reactor comprises a set of electrodes in and/or around the plasma zone, the electrodes configured to ignite a plasma using any or any combination of the following:
- Microwave (MW) excitation;
- Radiofrequent (RF) discharge;
- Dielectric Barrier Discharge (DBD);
- Capacitively Coupled Discharge (CCD);
- Inductively Coupled Discharge (ICD);
- DC or AC Arc discharge;
- Gliding Arc (GA) discharge;
- Glow Discharge,
or any equivalents thereof.

In a preferred embodiment, the plasma reactor is a dielectric barrier discharge (DBD) reactor and/or the plasma is ignited using a dielectric barrier discharge.

In an embodiment, the plasma reactor comprises a single reactor chamber. However, in other embodiments, the plasma reactor comprises two or more reactor chambers, each reactor chamber comprising a plasma zone. Hereby, the reactor chambers may be positioned in series and/or in parallel. The number of reactors may be any of 2, 3, 4, 5, 6, 7, 8, 9, 10 or more.

In an embodiment, the reactor chamber is made of steel, copper, aluminium, ceramics, plastic, or any combination thereof. Alternatively or additionally, the plasma reactor may be made of recycled materials.

In an embodiment, the plasma reactor comprises a DC or an AC electric power source. The power range of the plasma reactor may range between 1 and 1,000,000 kW.

In a preferred embodiment, the system comprises multiple plasma reactors which are arranged in series and/or in parallel with respect to the initial input stream and the final output stream. Preferably, the multiple reactors are arranged in parallel. This allows upscaling of the system to large volumes of CO2 comprising streams.

Hereby, the multiple plasma reactors may be arranged in a matrix or column form, and the initial input stream may be divided over the parallel-arranged reactors using a manifold and/or a set of division valves. Preferably the system comprises N plasma reactors, wherein N is between 2 and 10000, preferably between 10 and 5000, such as 2, 3, 4, 5, 6, 7, 8, 9, 10, 15, 20, 30, 50, 70, 100, 200, 300, 500, 700, 1000, 1500, 2000, 3000, 5000, 7000 or 10000.

Hereby, the system may comprise a recycling system configured to receive the output streams of multiple plasma reactors and to recycle the combined output stream as an input stream for the multiple plasma reactors. Alternatively, or additionally, the system may comprise multiple recycling systems, each of which configured to receive the output stream of one plasma reactor or of a subset of the multiple plasma reactors and to recycle the output stream as an input stream for the one plasma reactor or the subset of the multiple plasma reactors.

In a preferred embodiment, the recycling system comprises one or more pumps and/or fans configured for pumping the output stream of a plasma reactor to an input of a different and/or the same plasma reactor. If such a pump is used, this pump may be of any suitable type, including centrifugal, rotary, positive displacement, diaphragm, gear and others.

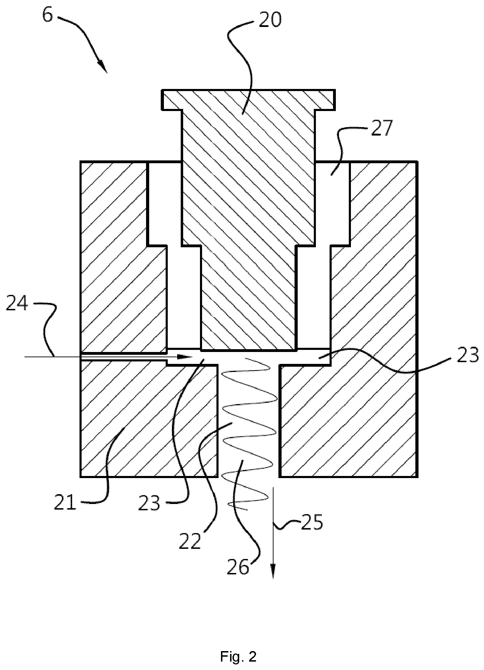

Figure 2 illustrates a cross section of a cylindrical plasma reactor (6) which can be used in embodiments of the systems and methods of the present invention. The plasma reactor (6) comprises a cathode electrode (20) and an anode electrode (21) separated by an insulator (27). Preferably the cathode can be put on a high voltage and the anode can be grounded in order to ignite a plasma, e.g. using a plasma discharge. The plasma reactor (20) comprises:
- an essentially cylindrical reaction chamber (22) which comprises a plasma zone (23) in between the electrodes (20, 21) wherein a plasma can be ignited;
- a plasma inlet (24) for receiving an input stream comprising CO2, and
- a plasma outlet (25) for evacuating an output stream wherein at least a portion of the CO2 of the input stream has been converted to CO.

The plasma reactor may also comprise a sulfur inlet for introducing a sulfur fluid stream into the reaction chamber, the sulfur fluid stream comprising sulfur and/or SO2. Alternatively, or additionally, sulfur and/or SO2 may be introduced into the reaction chamber via the plasma inlet (24), preferably by mixing the sulfur and/or sulfur dioxide in the CO2-comprising stream.

The plasma zone (23) may preferably comprise an ignition gap, preferably a cylindrical ignition gap, between the electrodes of between 1mm and 20mm, preferably about 2mm.

Preferably the plasma inlet (24) is positioned eccentric and/or tangential with respect to the reaction chamber, allowing formation of a vortex in the plasma and in the plasma afterglow.

Note that the plasma is ignited in the plasma zone, but that the conversion of the CO2 to CO, the conversion of S to SO2 or SO3 and the conversion of SO2 to SO3 may occur in the plasma zone and/or further downstream in the reaction chamber, e.g. in the plasma afterglow region. Note that the plasma reactor (6) comprises a stabiliser for stabilizing a vortex (26) in the plasma and in the plasma afterglow, the stabiliser comprising a set of plasma reactor walls shaped to stabilize the vortex (26).

In an embodiment, the recycling system of the system of the present invention comprises a set of recirculation blowers and/or recirculation pumps configured to recycle the output stream as an input stream to the plasma zone.

In an embodiment, the plasma is stabilized, preferably by using any or any combination of:
- flow-based stabilisation methods such as by inducing a vortex, a reverse vortex and/or plasma recirculation;
- wall-based stabilisation;
- magnet stabilisation, which can be permanent and/or inductive stabilisation.

Accordingly, the plasma reactor of the system according to the present invention preferably comprises plasma stabilisation means, preferably any or any combination of:
- flow-controlling means such as a vortex generator, a reverse-vortex generator and/or a plasma recirculatory;
- a set of plasma reactor walls configured to stabilise the plasma in the plasma zone;
- a magnet, such as a permanent and/or an inductive magnet.

### Examples 1-2

A cylindrical DBD reactor comprised of an inner ground electrode (stainless steel rod, 8 mm outer diameter), surrounded by a hollow ceramic cylinder with an internal diameter of 17 mm and outer diameter of 22 mm. This ceramic cylinder acted as a dielectric barrier. Both ends of the reactor were affixed with stainless steel caps, connected to the inner electrode. The outer electrode (stainless steel mesh, 100 mm length, 1 mm thickness) was positioned around the outer walls of the ceramic cylinder. As a result, the inner (ground) electrode and the outer (high volatage, HV) electrode were separated by a ceramic cylinder with a wall thickness of 2.5 mm and a gap of ca. 4.5 mm. This gap was filled with sulfur powder (ca. 25g, 20 mL volume, >99.5 wt.% elemental sulfur), held on both sides with glass wool.

The dielectric barrier discharge (DBD) reactor was provided with a feed of CO2, supplied by a flow controller connected to a CO2 gas cylinder (99.995 wt.% CO2). The flow rate was set to 0.1 L/min (NTP conditions, flow rate measured at 20°C and 1 atm).

The plasma exhaust was bubbled through a Drechsel flask comprising deionized water (example 1) or a 0.5M NaOH solution (example 2).

In water, gaseous SO₂ will form H₂SO₃, which can be measured as sulphite ions.

In water, gaseous SO₃ will form H₂SO₄, which can be measured as sulphate ions.

In sodium hydroxide solution, gaseous SO2 will form Na₂SO₃ is formed, which can be measured as sulphite ions.

In sodium hydroxide solution, gaseous SO3 will form Na₂SO₄ is formed, which can be measured as sulphate ions.

The pH in the Drechsel flask was monitored in accordance with ASTM E 70.

The sulphite (SO₃)²⁻ concentration was measured through iodometry.

The sulphate (SO₄)²⁻ concentration was measured according to ASTM E 291.

The results when bubbling the plasma exhaust through deionized water according to example 1 are shown in the table below:

| | pH | Sulphite concentration [ppm] | Sulphate concentration [ppm] |
|---|---|---|---|
| Deionized water (control) | 6.5 | 0 | 0 |
| Deionized water bubbled with CO2 | 4 | 0 | 0 |
| Deionized water bubbled with the plasma exhaust | <1 | 426 | 54 |

First deionized water was tested. No sulphite or sulphate were measured. Next, CO2 was bubbled through the water mixture without the activation of the DBD plasma reactor. The pH reduced through formation of carbonated water, but still no sulphite or sulphate were measured. Lastly, deionized water was bubbled with the plasma exhaust, having CO2 as gaseous feedstock and elemental sulphur stacked within the reactor. Both sulphite and sulphate were found in aqueous solution; and the pH lowered drastically.

The experiment was repeated with an 0.5M sodium hydroxide (NaOH) solution in the Drechsel flask. The results when bubbling the plasma exhaust through sodium hydroxide according to example 2 are shown in the table below:

| | pH | Sulphite concentration [ppm] | Sulphate concentration [ppm] |
|---|---|---|---|
| NaOH (0.5M) (control) | 14.3 | 0 | 0 |
| NaOH (0.5M) bubbled with the plasma exhaust | 8.8 | <1 | 21 |

First sodium hydroxide without bubbling was tested. No sulphite or sulphate were measured. Subsequently, the DBD reactor was turned on and the plasma exhaust was bubbled through said 0.5M sodium hydroxide solution. Both sulphite and sulphate were measured. Sulphate was present in a relatively large amount.

The presence of sulphite and sulphate ions in both water and shows the combination of plasma dissociation of CO2 and sulfur oxidation allows for the direct production of a mixture of SO2 and SO3. It further shows SO3 can be created in a single step process in greater quantities than generally achieved without the two-step catalytic contact process.

## Claims

1. A method for oxidizing reactant sulfur (S) by means of carbon dioxide (CO2), comprising the steps of:
a) decomposing CO2 to form carbonyl (CO) radicals and oxygen (O) radicals by igniting a plasma in a plasma process fluid stream comprising said CO2;
b) contacting reactant sulfur with said oxygen radicals, thereby oxidizing said reactant sulfur to a mixture of product sulfur dioxide (SO2) and product sulfur trioxide (SO3);
thereby obtaining an outlet fluid stream comprising a mixture of said product sulfur dioxide and said product sulfur trioxide.

2. Method according to claim 1, wherein the outlet fluid stream comprises a mixture of said product sulfur dioxide and said product sulfur trioxide, wherein the ratio by weight of sulfur trioxide (SO3) to sulfur dioxide (SO2) is at least 0.1, preferably at least 0.5.

3. Method according to any of the preceding claims, comprising the step of producing carbon monoxide from the carbonyl radicals.

4. Method according to claim 3, whereby the step of producing carbon monoxide from the carbonyl radicals comprises exposing the carbonyl radicals to a carbon donor.

5. Method according to claim 3 or 4, comprising the step of separating carbon monoxide from the product SO2 and product SO3 in the outlet fluid stream.

6. Method according to claim 5, wherein the carbon monoxide is separated from the mixture of product SO2 and product SO3 by exposing the outlet fluid stream to water.

7. Method according to claim 6, wherein said water comprises an alkali, preferably said water has a pH of at least 9.

8. A system for oxidizing reactant sulfur (S) by means of carbon dioxide (CO2), comprising a plasma reactor having:
- a reaction chamber comprising an inlet for plasma process fluid stream and an outlet for an outlet fluid stream;
- plasma igniting means for igniting a plasma in the plasma process fluid stream within the reaction chamber,
the system further comprising:
- a CO2 supply in fluid connection with the reaction chamber via the inlet, the CO2 supply comprising CO2, and
- a reactant sulfur supply in fluid connection with the reaction chamber, the reactant sulfur supply comprising reactant sulfur.

9. System according to claim 8, wherein the plasma igniting means comprise a set of electrodes for igniting a plasma in the process gas for creating CO and oxygen (O) radicals.

10. System according to claim 8 or 9, comprising a carbon donor in the reaction chamber and/or at the outlet of the reaction chamber for producing carbon monoxide from carbonyl radicals.

11. System according to claim 10, wherein the carbon donor comprises carbon-donor particles.

12. System according to any of the claims 8 to 11, comprising a carbon monoxide separation unit in fluid connection with the outlet.

13. System according to claim 12, whereby the carbon monoxide separation unit comprises a washer unit.

## Patentansprüche

1. Verfahren zum Oxidieren des Reaktants Schwefel (S) mittels Kohlenstoffdioxid (CO2), die folgenden Schritte umfassend:
a) Aufschließen von CO2, um Carbonyl- (CO-) Radikale und Sauerstoff- (O-) Radikale zu bilden, durch Zünden eines Plasmas in einem Plasmaprozessfluidstrom, der das CO2 umfasst,
b) In-Kontakt-Bringen des Reaktants Schwefel mit den Sauerstoffradikalen, wodurch der Reaktant Schwefel zu einer Mischung aus dem Produkt Schwefeldioxid (SO2) und dem Produkt Schwefeltrioxid (SO3) oxidiert wird,
wodurch ein Auslassfluidstrom erhalten wird, der eine Mischung aus dem Produkt Schwefeldioxid und dem Produkt Schwefeltrioxid umfasst.

2. Verfahren nach Anspruch 1, wobei der Auslassfluidstrom eine Mischung aus dem Produkt Schwefeldioxid und dem Produkt Schwefeltrioxid umfasst, wobei das Gewichtsverhältnis von Schwefeltrioxid (SO3) zu Schwefeldioxid (SO2) mindestens 0,1 beträgt, vorzugsweise mindestens 0,5.

3. Verfahren nach einem der vorhergehenden Ansprüche, den Schritt des Produzierens von Kohlenstoffmonoxid aus den Carbonylradikalen umfassend.

4. Verfahren nach Anspruch 3, wobei der Schritt des Produzierens von Kohlenstoffmonoxid aus den Carbonylradikalen das In-Kontakt-Bringen der Carbonylradikale mit einem Kohlenstoffdonor umfasst.

5. Verfahren nach Anspruch 3 oder 4, den Schritt des Abscheidens von Kohlenstoffmonoxid von dem Produkt SO2 und dem Produkt SO3 in dem Auslassfluidstrom umfassend.

6. Verfahren nach Anspruch 5, wobei das Kohlenstoffmonoxid von der Mischung aus dem Produkt SO2 und dem Produkt SO3 durch In-Kontakt-Bringen des Auslassfluidstroms mit Wasser abgeschieden wird.

7. Verfahren nach Anspruch 6, wobei das Wasser ein Alkali umfasst, wobei das Wasser vorzugsweise einen pH-Wert von mindestens 9 aufweist.

8. System zum Oxidieren des Reaktants Schwefel (S) mittels Kohlenstoffdioxid (CO2), einen Plasmareaktor umfassend, der Folgendes aufweist:
- eine Reaktionskammer, die einen Einlass für einen Plasmaprozessfluidstrom und einen Auslass für einen Auslassfluidstrom umfasst,
- Plasmazündmittel zum Zünden eines Plasmas in dem Plasmaprozessfluidstrom in der Reaktionskammer,
wobei das System ferner Folgendes umfasst:
- eine CO2-Zuführung in Fluidverbindung mit der Reaktionskammer über den Einlass, wobei die CO2-Zuführung CO2 umfasst, und
- eine Zuführung für den Reaktant Schwefel in Fluidverbindung mit der Reaktionskammer, wobei die Zuführung für den Reaktant Schwefel den Reaktant Schwefel umfasst.

9. System nach Anspruch 8, wobei das Plasmazündmittel einen Satz Elektroden zum Zünden eines Plasmas in dem Prozessgas zum Erzeugen von CO- und Sauerstoff- (O-) Radikalen umfasst.

10. System nach Anspruch 8 oder 9, einen Kohlenstoffdonor in der Reaktionskammer und/oder am Auslass der Reaktionskammer zum Produzieren von Kohlenstoffmonoxid aus Carbonylradikalen umfassend.

11. System nach Anspruch 10, wobei der Kohlenstoffdonor Kohlenstoffdonorpartikel umfasst.

12. System nach einem der Ansprüche 8 bis 11, eine Abscheideeinheit für Kohlenstoffmonoxid in Fluidverbindung mit dem Auslass umfassend.

13. System nach Anspruch 12, wobei die Abscheideeinheit für Kohlenstoffmonoxid eine Wascheinheit umfasst.

## Revendications

1. Procédé d'oxydation de soufre réactif (S) au moyen de dioxyde de carbone (CO2), comprenant les étapes consistant à :
a) décomposer du CO2 pour former des radicaux carbonyle (CO) et des radicaux oxygène (O) en allumant un plasma dans un flux de fluide de procédé plasma comprenant ledit CO2 ;
b) mettre en contact du soufre réactif avec lesdits radicaux oxygène, oxydant ainsi ledit soufre réactif en un mélange de produit dioxyde de soufre (SO2) et de produit trioxyde de soufre (SO3) ;
obtenant ainsi un flux de fluide de sortie comprenant un mélange dudit produit dioxyde de soufre et dudit produit trioxyde de soufre.

2. Procédé selon la revendication 1, dans lequel le flux de fluide de sortie comprend un mélange dudit produit dioxyde de soufre et dudit produit trioxyde de soufre, dans lequel le rapport en poids du trioxyde de soufre (SO3) au dioxyde de soufre (SO2) est d'au moins 0,1, de préférence d'au moins 0,5.

3. Procédé selon l'une quelconque des revendications précédentes, comprenant l'étape consistant à produire du monoxyde de carbone à partir des radicaux carbonyle.

4. Procédé selon la revendication 3, dans lequel l'étape de production de monoxyde de carbone à partir des radicaux carbonyle comprend l'exposition des radicaux carbonyle à un donneur de carbone.

5. Procédé selon la revendication 3 ou 4, comprenant l'étape consistant à séparer le monoxyde de carbone du produit SO2 et du produit SO3 dans le flux de fluide de sortie.

6. Procédé selon la revendication 5, dans lequel le monoxyde de carbone est séparé du mélange de produit SO2 et de produit SO3 en exposant le flux de fluide de sortie à de l'eau.

7. Procédé selon la revendication 6, dans lequel ladite eau comprend un alcali, de préférence ladite eau a un pH d'au moins 9.

8. Système permettant d'oxyder du soufre réactif (S) au moyen de dioxyde de carbone (CO2), comprenant un réacteur à plasma ayant :
- une chambre de réaction comprenant une entrée pour un flux de fluide de procédé plasma et une sortie pour un flux de fluide de sortie ;
- des moyens d'allumage du plasma pour allumer un plasma dans le flux de fluide de procédé plasma au sein de la chambre de réaction,
le système comprenant en outre :
- une alimentation en CO2 en liaison fluidique avec la chambre de réaction par l'intermédiaire de l'entrée, l'alimentation en CO2 comprenant du CO2, et
- une alimentation en soufre réactif en liaison fluidique avec la chambre de réaction, l'alimentation en soufre réactif comprenant du soufre réactif.

9. Système selon la revendication 8, dans lequel les moyens d'allumage du plasma comprennent un jeu d'électrodes pour allumer un plasma dans le gaz de procédé pour créer des radicaux CO et oxygène (O).

10. Système selon la revendication 8 ou 9, comprenant un donneur de carbone dans la chambre de réaction et/ou au niveau de la sortie de la chambre de réaction pour produire du monoxyde de carbone à partir de radicaux carbonyle.

11. Système selon la revendication 10, dans lequel le donneur de carbone comprend des particules donneuses de carbone.

12. Système selon l'une quelconque des revendications 8 à 11, comprenant une unité de séparation du monoxyde de carbone en liaison fluidique avec la sortie.

13. Système selon la revendication 12, dans lequel l'unité de séparation du monoxyde de carbone comprend une unité de lavage.
